Europäisches Patentamt

European Patent Office

Office européen des brevets

(19)

(11) EP 1 079 483 B1

(12) EUROPÄISCHE PATENTSCHRIFT

(45) Veröffentlichungstag und Bekanntmachung des Hinweises auf die Patenterteilung:
07.05.2003 Patentblatt 2003/19

(51) Int Cl.⁷: **H01S 3/08**, G02F 1/35, G02B 5/08

(21) Anmeldenummer: 00113568.0

(22) Anmeldetag: 27.06.2000

(54) **Resonatorspiegel mit einem sättigbaren Absorber**

Resonator mirror with saturable absorber

Miroir de cavité avec absorbant saturable

(84) Benannte Vertragsstaaten:
CH DE FR GB LI

(30) Priorität: 23.07.1999 DE 19934639

(43) Veröffentlichungstag der Anmeldung:
28.02.2001 Patentblatt 2001/09

(73) Patentinhaber: Jenoptik Ldt GmbH
07548 Gera (DE)

(72) Erfinder:
• Deichsel, Eckard
89520 Heidenheim (DE)
• Jäger, Roland
89075 Ulm (DE)
• Unger, Peter
89075 Ulm (DE)

(74) Vertreter: Geyer, Werner, Dr.-Ing. et al
Patentanwälte
Geyer, Fehners & Partner
Perhamerstrasse 31
80687 München (DE)

(56) Entgegenhaltungen:
WO-A-96/36906

• KOPF D ET AL: "BROADLY TUNABLE FEMTOSECOND CR:LISAF LASER" OPTICS LETTERS,US,OPTICAL SOCIETY OF AMERICA, WASHINGTON, Bd. 22, Nr. 9, 1. Mai 1997 (1997-05-01), Seiten 621-623, XP000691331 ISSN: 0146-9592

• FLUCK R ET AL: "DIODE-PUMPED PASSIVELY MODE-LOCKED 1.3-MUM ND:YVO4 AND ND:YLF LASERS BY USE OF SEMICONDUCTOR SATURABLE ABSORBERS" OPTICS LETTERS,US,OPTICAL SOCIETY OF AMERICA, WASHINGTON, Bd. 21, Nr. 17, 1. September 1996 (1996-09-01), Seiten 1378-1380, XP000627765 ISSN: 0146-9592

• KELLER U ET AL: "SEMICONDUCTOR SATURABLE ABSORBER MIRRORS(SESAM'S) FOR FEMTOSECOND TO NANOSECOND PULSE GENERATION IN SOLID-STATE LASERS" IEEE JOURNAL OF SELECTED TOPICS IN QUANTUM ELECTRONICS,US,IEEE SERVICE CENTER, Bd. 2, Nr. 3, 1. September 1996 (1996-09-01), Seiten 435-451, XP000689812 ISSN: 1077-260X

• ZHANG Z ET AL: "FEMTOSECOND CR: FORSTERITE LASER WITH MODE LOCKING INITIATED BY A QUENTUM-WELL SATURABLE ABSORBER" IEEE JOURNAL OF QUANTUM ELECTRONICS,US,IEEE INC. NEW YORK, Bd. 33, Nr. 11, 1. November 1997 (1997-11-01), Seiten 1975-1981, XP000724499 ISSN: 0018-9197

• OGAWA K ET AL: "SPECTRAL CHARACTERISTICS OF AN INP/INGAAS DISTRIBUTED ABSORBING BRAGG REFLECTOR" APPLIED PHYSICS LETTERS,US,AMERICAN INSTITUTE OF PHYSICS. NEW YORK, Bd. 72, Nr. 2, 12. Januar 1998 (1998-01-12), Seiten 155-157, XP000735433 ISSN: 0003-6951

**Beschreibung**

Die Erfindung betrifft einen Resonatorspiegel mit einem Sättigbaren Absorber, der aus mehreren Halbleiterschichten auf einem Substrat aufgebaut ist, für die Verwendung in einem Festkörperlaserresonator.

In der WO 96/36906 A1 werden optische Komponenten zur Erzeugung gepulster Laserstrahlung beschrieben, die auch als Resonatorspiegel eingesetzt werden können.

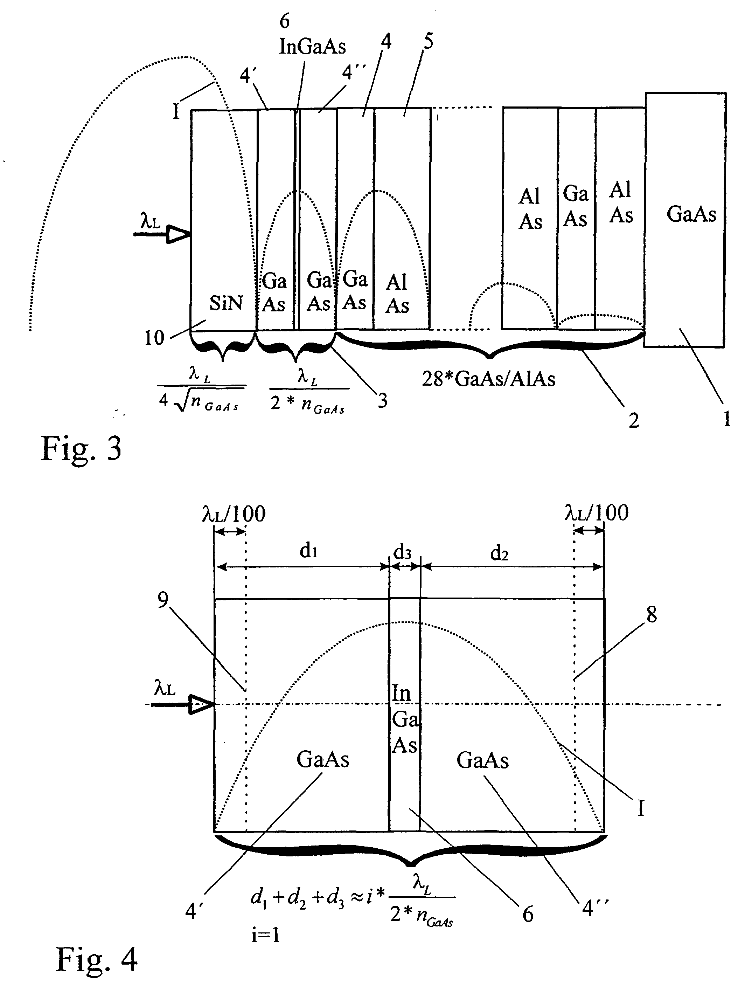

Diese Resonatorspiegel beinhalten einen Schichtaufbau, der einen Reflektor und einen Sättigbaren Absorber beinhaltet. Durch die Lage der Absorberschicht in einem Schichtensemble soll die auf der Struktur des Beschichtungsensembles beruhende Wellenlängenabhängigkeit mit der vom absorbierenden Material gegebenen Absorption für einen vorgegebenen Wellenlängenbereich kompensiert werden (Seite 8, Zeilen 29-35). Aus Figur 3 und der zugehörigen Beschreibung ist zu entnehmen, daß es mit dieser Maßnahme gelingen soll, die Reflektivität über einen Wellenlängenbereich von etwa 50 nm bei nahezu 100% zu halten.

Weiterhin soll mit dem Schichtaufbau eine negative Dispersion der Gruppengeschwindigkeit der Strahlungswellen im Laserresonator erreicht werden (Seite 11, Zeile 1-3). Ziel der Anordnung des Sättigbaren Absorbes innerhalb des Schichtaufbaues ist, daß neben der Eigenschaft einer negativen Dispersion zusätzlich die Eigenschaft einer sättigbaren Absorption optimal im Schichtaufbau integriert ist (Seite 11, Zeilen 19-27).

Der Verlauf der Intensität innerhalb des Beschichtungsensembles ist aus der Figur 4 für vier Wellenlängen innerhalb eines Wellenlängenbereiches von 40 nm zu entnehmen. Aus den Figuren 8 und deren Beschreibung ist zu entnehmen, daß durch die Lage des Sättigbaren Absorbers im Beschichtungsensemble die Reflektivität der optischen Komponente eingestellt werden kann.

Weiter ist im Anspruch 4 geschrieben, daß der Sättigbare Absorber an einem Ort angeordnet ist, an dem eine hohe Strahlungsintensitätsstärkeänderung und eine hohe Absorptionsänderung in einem Wellenlängenbereich vorliegt. Damit soll im Zusammenwirken mit den anderen Schichten ein vorgegebener Reflexionsverlauf innerhalb eines Wellenlängenbereiches geschaffen werden (siehe Anspruch 5).

Es soll ein gleichmäßig hoher Reflexionsgrad über einen Wellenlängenbereich von 50 nm erreicht werden (Figuren 3, 8a - e).

Optimierungskriterium ist, eine optimale sättigbar absorbierende Wirkung dieser optischen Komponente zu erhalten. Aus dem Inhalt der Beschreibung kann entnommen werden, daß das Optimum darin besteht, (Seite 11 Zeilen 33 bis 37) Laserpulse mit extrem kurzer Pulsbreite (kleiner 10 fs) zu erhalten und/oder, daß (Seite 15, Zeilen 10-16) der Sättigbare Absorber an dem Ort plaziert wird, wo die gewünschte Wirkung eintritt: die gewünschte Breitbandigkeit in Bezug auf einen gewünschten Wellenlängenbereich zu erhalten.

Die Aufgabe dieser Erfindung besteht darin, einen vergleichsweise einfach aufgebauten Resonatorspiegel mit einem Sättigbaren Absorber für die Verwendung in einem Festkörperlaserresonator zu schaffen, der leistungsmäßig hoch belastbar ist. Dabei soll der Sättigbare Absorber Laserpulse mit einer Breite im Bereich von 0,1 ps bis 100 ps erzeugen, wobei eine vorgegebenen Peakleistung möglichst konstant eingehalten werden soll.

Die Erfindung wie sie in den Ansprüchen 1 - 15 definiert ist, betrifft einen Resonatorspiegel mit einem Sättigbaren Absorber für eine Laserwellenlänge $\lambda_L$, der aus einer Schichtfolge mehrerer Halbleiterschichten auf einem Substrat aufgebaut ist, wobei auf einer Oberfläche des Substrates ein Bragg-Reflektor aufgewachsen ist, welcher aus einer Vielzahl alternierend angeordneter Schichten aus einem ersten Material mit einem Brechungsindex $n_H$ und aus einem zweiten Material mit einem dem gegenüber niedrigeren Brechungsindex $n_L$ besteht.

Der Resonatorspiegel ist für eine Verwendung in einem modensynchronisierten Festkörperlaserresonator mit einer Ausgangsleistung größer 1 W, insbesondere größer 7 W, vorgesehen.

Gemäß der Erfindung besteht der Resonatorspiegel mit einem Sättigbaren Absorber aus dem auf einem Substrat aufgewachsenen Bragg-Reflektor und einer auf diesem aufgewachsenen Dreifach-Schicht, die als Sättigbarer Absorber für die Laserwellenlänge $\lambda_L$ wirkt, bei der eine Einfach-Quantenschicht innerhalb von zwei Schichten außerhalb eines Intensitätsminimums für die Laserstrahlung $\lambda_L$ eingelagert ist und die Dreifach-Schicht zusammen optisch $\frac{\lambda_L}{2}$ dick ist.

Bei der Bestimmung der Schichtdicke der Einfach-Quantenschicht, der diese einbettenden zwei Schichten und der ersten und der zweiten Schichten für den Bragg-Reflektor wird mit den Brechungsindizes der jeweiligen Materialien für die Laserwellenlänge $\lambda_L$ gerechnet. Die optische Dicke ergibt sich aus der Luftwellenlänge dividiert durch die Brechzahl n der entsprechenden Schicht für die Laserwellenlänge $\lambda_L$. Dabei sind die Brechzahlen der die Einfach-Quantenschicht einhüllenden zwei Schichten nicht kritisch und diese können auch für jede der zwei Schichten verschieden sein. Wichtig ist die Einhaltung der optischen Gesamtdicke $\frac{\lambda_L}{2}$ der Dreifach-Schicht. Die Auswahl der Materialien für die Dreifach-Schicht richtet sich daher insbesondere nach den stofflichen Eigenschaften des Bragg-Reflektors, insbesondere nach den Gitterkonstanten der verwendeten Materialien, welche möglichst gleich sein sollten. Gleiche Gitterkonstanten erlauben ein möglichst fehlerfreies einkristallines Wachstum der Schichten auf einem einkristallinen Substrat. Einkristalline Schichtsysteme sind besonders vorteilhaft, da diese eine besonders geringe Absorption haben. Die Auswahl des Materials für die Einfach-Quantenschicht und deren Dicke hängen wiederum von seinen sättigbar absorbierenden Eigenschaften (Bandlücke) für die Laserwellenlänge ab und ist nicht auf die hier genannten Materialien beschränkt. Die zwei Schichten müssen vor allem eine geringe Absorption für die Laserwellenlänge $\lambda_L$ und die Eigenschaft haben, mit der Einfach-Quantenschicht und dem Schichtsystem des Bragg-Reflektors eine dauerhafte, feste Verbindung herzustellen.

Die Dreifach-Schicht wird nachfolgend als Schicht bezeichnet, die die sättigbar absorbierende Wirkung hat, wobei nur die Einfach-Quantenschicht mit ihrer Bandlücke die eigentlich absorbierende Schicht ist, jedoch diese hier nur durch ihre Einbettung innerhalb der Dreifach-Schicht in der nachfolgend beschriebenen Art und Weise funktionsfähig ist.

Die Einfach-Quantenschicht unterliegt hier keiner Resonanzbedingung innerhalb eines Laserresonators. Ihre Funktion ist vergleichbar mit der eines Farbstoff-Absorbers in einem Farbstofflaser oder Festkörperlasers. Es muß hervorgehoben werden, daß hier nicht ultrakurze Impulse im Femtosekunden und im Milliwatt-Bereich erzeugt werden sollen, wie diese in der Nachrichtentechnik gewünscht werden. Praktisch wird der Resonatorspiegel so ausgelegt, daß mit einer möglichst geringen Anzahl von alternierenden Einzelschichten ein vorgegebener hoher Reflexionsgrad für die Laserwellenlänge $\lambda_L$ erreicht wird, wobei hier ein

Reflexionsgrad von 98% im allgemeinen für den Laserbetrieb ausreichend ist.

Zusammen mit der Dreifach-Schicht als Sättigbaren Absorber sind zum Beispiel nur etwa 30 Einzelschichten für einen Reflektor mit einer sättigbar absorbierenden Wirkung erforderlich. Diese vergleichsweise geringe Anzahl von Einzelschichten erfordert einen entsprechend geringen Herstellungsaufwand. Wichtiger ist jedoch, daß die vergleichsweise geringe Anzahl von Einzelschichten in Verbindung mit einer entsprechenden Beherrschung und Führung der Beschichtungsverfahren zu einem sehr homogenen Schichtaufbau senkrecht zur Strahlrichtung des Laserlichts führt. Dieses wiederum ermöglicht die Verwendung einer vergleichsweise geringen Fokussierung der Laserstrahlung auf den Resonatorspiegel.

Der Spot-Durchmesser auf dem Resonatorspiegel kann hier mehr als 200 µm betragen und kann bis etwa 5 mm aufgeweitet werden, wobei eine saubere, konstante Modensynchronisation des Lasers erfolgt. Diese vergleichsweise großen Spot-Durchmesser reduzieren die Leistungsdichte am Resonatorspiegel erheblich. Typisch ist ein Wert von kleiner 100 kW/cm$^2$ bis hin zu etwa 2 kW/cm$^2$, bezogen auf cw-Betrieb des Lasers.

In der Praxis wird aber möglichst nahe an der Belastbarkeitsgrenze des Resonatorspiegels gearbeitet, um eine maximale Laserausgangsleistung über eine vorgegebene Lebensdauer der Laserstrahlungsquelle zu erzielen.

Die Erfindung ermöglicht eine vergleichsweise einfache, überschaubare Berechnung eines Resonatorspiegels mit einem Sättigbaren Absorber, da die Funktion der Einzelbauelemente Bragg-Reflektor und Sättigbarer Absorber dessen Grundlagen sind. Durch die Wahl der Position der Einfach-Quantenschicht innerhalb der Dreifach-Schicht ist eine einfache Möglichkeit gegeben, die Strahlungsfestigkeit eines derartigen Resonatorspiegels in weiten Grenzen zu beeinflussen.

Weiterhin ergibt sich auch eine vergleichsweise einfache Prozeßführung für den Schichtaufbau durch entsprechende Verfahren der Dünnschichttechnik, wobei heute vornehmlich epitaktisch aufgewachsene Schichten eingesetzt werden.

Die Dreifach-Schicht kann auch ein ganzzahliges Vielfaches i von $\frac{\lambda_L}{2}$ optisch dick sein, wobei die Vorteile der Erfindung erhalten bleiben. Die um den Faktor i dickere Dreifach-Schicht ist vor allem wegen einer besseren Oberflächenpassivierung, zum Schutz der Einfach-Quantenschicht erforderlich, wobei i in der Regel mit 2 oder 3 gewählt, ausreichend ist.

Das Absorptionsverhalten des Resonatorspiegels mit dem Sättigbaren Absorber wird durch die Wahl der Dicke $d_3$ der Einfach-Quantenschicht und deren Position zwischen den beiden Schichten eingestellt, wobei eine der beiden Schichten eine Mindestdicke von $\frac{\lambda_L}{100}$ hat.

Auf jeden Fall sollte diese Mindestdicke größer als die Dicke der Einfach-Quantenschicht sein. Die Einfach-Quantenschicht muß genügend weit vom Stehwellenminimum entfernt liegen und ausreichend mechanisch und chemisch gegenüber angrenzenden Medien geschützt werden.

Das Absorptionsverhalten der Einfach-Quantenschicht bestimmt wesentlich die Pulsdauer eines modensynchronisierten Lasers, in dem dieser Resonatorspiegel eingesetzt wird. Die Lage der Einfach-Quantenschicht innerhalb der beiden Schichten wird nach dem Kriterium der gewünschten oder erforderlichen Laserfestigkeit des Resonatorspiegels festgelegt, wobei diese Lage vom Stehwellenminimum der Laserstrahlung soweit entfernt liegen muß, daß die erforderliche sättigbar absorbierende Wirkung erhalten bleibt, um kurze Laserpulse zum Beispiel im Pikosekunden-Bereich zu erzeugen. Das Absorptionsverhalten und damit die in einem Laser erzeugte Pulsdauer sind besonders gut und reproduzierbar durch die Wahl der Lage der Einfach-Quanten-Schicht zwischen den beiden umhüllenden Schichten innerhalb der Dreifach-Schicht einstellbar. Pulsdauer und Absorptionsverhalten bestimmen wiederum die Leistungsfestigkeit des Resonatorspiegels, wobei erwartet wird, daß längere Pulse die Leistungsfestigkeit des Resonatorspiegels erhöhen.

Es hat sich jedoch gezeigt, daß die Eigenschaften und Wirkparameter des Resonatorspiegels mit dem Sättigbaren Absorber sehr stark von den jeweiligen Einbaubedingungen innerhalb eines Laserresonators (Resonatordesign) abhängen.

Es ist ein Vorteil, der sich aus der Erfindung ergibt, daß der Resonatorspiegel mit dem Sättigbaren Absorber im Zusammenwirken mit dem Laserresonator auf die jeweiligen anwenderspezifischen Anforderungen hin durch eine einfache, überschaubare Maßnahme optimiert wird: Platzierung der Einfach-Quantenschicht innerhalb der Dreifachschicht.

Praktisch wird folgende Vorgehensweise durchgeführt: Es wird zunächst eine Resonatorgeometrie entworfen, die mindestens den Laserkristall, einen Auskoppelspiegel und den Resonatorspiegel enthält (siehe: *Köcher, W.:Solid-Stade Laser Engineering, Vol. 1; Edition 4; Berlin, Springer Verlag 1996*). Mit Kenntnis der erfindungsgemäßen Lehre sind wenige Versuche notwendig, in denen die Lage der Einfach-Quantenschicht innerhalb der Dreifach-Schicht variiert wird, um Pulsdauern und Laserfestigkeiten bei verschiedenen Laserausgangsleistungen zu ermitteln. Es werden für eine konkrete Gestaltung eines jeweiligen Laserresonators Abhängigkeiten ermittelt, die zu einer Optimierung der Lage der Einfach-Quantenschicht innerhalb der Dreifach-Schicht genutzt werden.

Versuche an einem Resonatordesign haben gezeigt: Ist die Einfach-Quantenschicht im Stehwellenmaximum der Laserstrahlung angeordnet, wurden die kürzesten Impulsdauern erreicht. Allerdings wurde in dieser Lage auch die relativ geringste Leistungsfestigkeit des Resonatorspiegels festgestellt.

Die Einfach-Quantenschicht ist daher vorzugsweise außerhalb eines Intensitätsmaximums der Laserstrahlung angeordnet. Praktisch nutzt die Erfindung eine Stellung der Einfach-Quantenschicht innerhalb der Dreifach-Schicht, die zwischen dem Stehwellenmaximum und dem Stehwellenminimum der Laserstrahlung liegt. Mit dieser Dimensionierung wurde eine Vergrößerung der Pulsdauer beobachtet, die jedoch durch zusätzliche, nachfolgend genannte Maßnahmen wieder reduziert werden kann, so daß ausreichend kurze Impulse der Laserstrahlung, im Pikosekundenbereich, und eine ausreichende Laserfestigkeit des Resonatorspiegels, im cw-Watt-Bereich, erreicht werden

Eine Verkürzung der Pulsdauer der Laserstrahlung wird durch eine Entspiegelungsbeschichtung erreicht, die auf der Dreifach-Schicht aufgebracht ist und die für die eine Laserwellenlänge $\lambda_L$ ausgelegt ist.

Durch die Entspiegelungsbeschichtung wird auch eine weitere Erhöhung der Leistungsfestigkeit des Resonatorspiegels erreicht. Mit dieser Entspiegelungsbeschichtung wird der Sättigbare Absorber weder resonant noch antiresonant betrieben.

Weiterhin wird die Pulsdauer der Laserstrahlung dadurch verkürzt, daß die Einfach-Quantenschicht als Niedrig-Temperatur-Schicht (Low-Temperature) aufgebracht wird, wobei die Pulsdauer niedriger wird, je niedriger die Wachstumstemperatur gewählt wird.

Die Einfach-Quantenschicht besteht insbesondere aus einem der Materialsysteme Indium-Gallium-Arsen (InGaAs) oder Gallium-Arsen-Antimon (GaAsSb) oder Gallium-Stickstoff-Arsen (GaNAs).

Für die Minimierung des Aufwandes zur Herstellung des Resonatorspiegels mit dem Sättigbaren Absorber ist es besonders vorteilhaft, wenn einer der Stoffe, die zum Aufbau des Bragg-Reflekktors eingesetzt werden auch mit zum Aufbau der Dreifach-Schicht verwendet wird. Schichten aus gleichen oder strukturell sehr ähnlichen Materialien werden besonders günstig epitaktisch aufeinander aufgewachsen. Dazu eignen sich die Materialien für die Herstellung des Bragg-Reflektors besonders günstig. Die Dreifach-Schicht besteht dann vorteilhafterweise aus einer Schicht aus dem ersten Material oder aus dem zweiten Material des Bragg-Reflektors, einer Einfach-Quantenschicht und einer weiteren Schicht aus dem ersten Material oder aus dem zweiten Material des Bragg-Reflektors. Die Einfach-Quantenschicht, deren Dicke $d_3$ von der Laserwellenlänge $\lambda_L$ abhängt, ist zwischen zwei Schichten aus dem ersten Material mit dem Brechungsindex $n_H$ oder zwischen zwei Schichten aus dem zweiten Material mit dem Brechungsindex $n_L$ eingebettet, wobei diese Schichten mit ihren Dicken $d_1$, $d_2$ und $d_3$ die Dreifach-Schicht bilden, die $\dfrac{\lambda_L}{2*n_H}$ oder $\dfrac{\lambda_L}{2*n_L}$ dick ist. Auch hier ist die Entspiegelungsbeschichtung vorteilhaft, wobei hier deren Brechzahl nach $\sqrt{n_H}$ oder $\sqrt{n_L}$ ausgelegt ist und diese

$$\frac{\lambda_L}{4*\sqrt{n_H}}$$

oder

$$\frac{\lambda_L}{4*\sqrt{n_L}}$$

dick ist, je nachdem, welches Material angrenzt.

Zur Steigerung der Laserfestigkeit des Resonatorspiegels ist dieser mit seinem Substrat auf einer Wärmesenke befestigt. Sie hat die Funktion eine konstante Betriebstemperatur des Sättigbaren Absorbers zu gewährleisten, wobei durch eine Einstellung der Solltemperatur eine Feinabstimmung der sättigbar absorbierenden Schicht auf die jeweilige Laserwellenlänge $\lambda_L$ erfolgt. Diese Wärmesenke sichert auch die geforderte hohe Konstanz der Peakleistung über die Zeit.

Eine vorteilhafte Ausgestaltung dieser Vorgehensweise besteht darin, daß das Substrat aus Galliumarsenid (GaAs) besteht und der Bragg-Reflektor aus Einzelschichten besteht, die jeweils eine Dicke haben, die für das erste Material mit dem Brechungsindex $n_H$ mit undotiertem Galliumarsenid

$$(GaAs)\ \frac{\lambda_L}{4*n_{GaAs}}$$

und die für das zweite Material mit dem niedrigeren Brechungsindex $n_L$ mit undotiertem Aluminiumarsenid

(AlAs) $\frac{\lambda_L}{4*n_{AlAs}}$ betragen, und die Einfach-Quantenschicht aus Indium-Galliumarsenid ($In_{1-x}Ga_xAs$) besteht.

Der Bragg-Reflektor besteht aus 15 bis 50 Einzelschichten, die Spiegelpaare bilden.

Die Zahl der Spiegelpaare bestimmt seinen Reflektivitätsgrad (siehe *Orazio Svelto: "Prinziples of Lasers " fourth edition Plenum Press 1998).* Zum Beispiel wird mit 28 Spiegelpaaren eine Reflektivität des Resonatorspiegels über 98 % erreicht. Praktisch wird immer angestrebt, mit möglichst wenig Schichten zu arbeiten.

Die Eigenschaften des Materialsystems Galliumarsenid/Aluminiumarsenid sind ausreichend untersucht, so daß diese Materialien mit der erforderlichen Homogenität der Schichtdicken und des Schichtaufbaues vergleichsweise einfach auf das Substrat aus Galliumarsenid epitaktisch aufgewachsen werden können.

Die Dimensionierung der Einfach-Quantenschicht aus Indium-Galliumarsenid ($In_{1-x}Ga_xAs$) für die jeweilige Laserwellenlänge ist aus der Literatur bekannt (siehe z.B. *Wang, C.A.; Hong K. Ch.: "Organometallic Vapor Phase Epitaxy of High-Performance Strained-Layer InGaAs-AlGaAs Diode Lasers" IEEE Jopurnal of Quantum Elektronics, Vol. 27,* No. *3*, March *1991*). Für eine Laserwellenlänge von 1064 nm ergibt sich eine Dicke der Einfach-Quantenschicht von etwa 7 nm und der Galliumanteil x = 67 %.

Die Einfach-Quantenschicht ist in zwei Galliumarsenid-Schichten eingebettet, wobei diese Schichten zusammen die entsprechende λ/2-Dicke aufweisen müssen. Praktisch wird der Schichtaufbau so ausgeführt, daß ein störungsfreier Schichtaufbau und ein technologisch günstiger Verfahrensablauf gewährleistet sind.

Das Absorptionsverhalten und damit die in einem Laser erzeugte Pulsdauer sind besonders gut und reproduzierbar durch die Wahl der Lage der Indium-Galliumarsenid-Einfach-Quantenschicht zwischen den beiden Galliumarsenid-Schichten innerhalb der Dreifach-Schicht einstellbar. Pulsdauer und Absorptionsverhalten bestimmen wiederum die Leistungsfestigkeit des Resonatorspiegels. Dabei hat eine der Galliumarsenid-Schichten, die innerhalb der als Sättigbarer Absorber wirkenden Dreifach-Schicht angeordnet ist, eine Mindestdicke von etwa $\frac{\lambda_L}{100}$.

Diese Mindestdicke ist erforderlich, damit die Indium-Galliumarsenid-Schicht als absorbierende Einfach-Quantenschicht funktioniert und diese gegenüber Umwelteinflüssen sehr empfindliche Schicht ausreichend geschützt ist.

Die dem Bragg-Reflektor abgewandte Galliumarsenid-Schicht dient damit immer als Schutzschicht für die Indium-Galliumarsenid-Schicht zum umgebenden Medium hin.

Die Indium-Galliumarsenid-Schicht ist in einem speziellen Fall innerhalb von zwei $\lambda_L$/4 optisch dikken Galliumarsenid-Schichten eingebettet. Dann steht die Indium-Galliumarsenid-Schicht genau im Stehwellenmaximum. Dies hat den Nachteil einer maximalen Energiedichte an dieser Stelle. Dieser Nachteil wird aber dadurch beseitigt, daß der Durchmesser des in den Resonatorspiegel einfallenden Strahlenbündels vergleichsweise sehr groß eingestellt wird, statt üblicherweise 10 μm Spotdurchmesser können mehr als 200 μm Spotdurchmesser eingestellt werden. Dies ist jedoch nur bei einem sehr homogenen Schichtaufbau möglich, der durch den vergleichsweise sehr einfachen Schichtaufbau und die vergleichsweise geringe Zahl von Einzelschichten begünstigt wird.

Die Indium-Galliumarsenid-Schicht ist vorteilhafterweise eine Low-Temperature-Schicht. Die Wachstumstemperatur sollte unter 500°C liegen, um hinreichend kurze Laserpulse zu erzeugen. Ziel dieser Erfindung ist jedoch nicht die Erzeugung möglichst kurzer Laserpulse, wie dies für Anwendungen in der Kommunikationstechnik gewünscht wird. Jedoch ist mit einer Low-Temperature-Schicht gewährleistet, daß der Sättigbare Absorber auch bei einer Optimierung des Schichtaufbaues hinsichtlich seiner Leistungsfestigkeit hinreichend kurze Laserimpulse liefert, die für viele technische Anwendungen im Bereich von 1 bis 10 Pikosekunden günstig liegen. Technische Anwendungen sind zum Beispiel die Materialbearbeitung oder die Bildprojektion mittels Laserlicht.

Der Einfluß der Pulsdauer des Laserlichts auf die Bilddarstellung ist zum Beispiel in der WO 98/20385 beschrieben. Dort ist beschrieben, daß bei der Bilderzeugung mit Laserlicht mit einer Pulsdauer in einem Bereich um die Pikosekunde die sogenannte Speckle-Erscheinungen von einem Beobachter nicht mehr wahrnehmbar sind.

Vorteilhafterweise ist, wie oben allgemein beschrieben auf der dem Reflektor abgewandten, äußeren Galliumarsenid-Schicht eine Entspiegelungsbeschichtung aufgebracht. Die Entspiegelungsbeschichtung ist für die eine Laserwellenlänge $\lambda_L$ ausgelegt, wobei sich deren Brechzahl nach $\sqrt{n_{GaAs}}$ berechnet und mit $n_{GaAs}$ für die Laserwellenlänge $\lambda_L$ verwendet wird. Ein Reflexionsgrad kleiner 1% ist ohne besondere Aufwendungen erreichbar, wobei die errechnete Brechzahl nur annähernd erreicht werden muß. Die optische Dicke der Entspiegelungsschicht ist $\lambda_L$/4.

Für die Laserwellenlänge $\lambda_L$ = 1064 nm ist die Entspiegelungsbeschichtung aus einer Schicht Siliziumoxinitrid oder aus einer Schicht Siliziumnitrid hergestellt.

Die Entspiegelungsbeschichtung liefert eine höhere Intensität in der Einfach-Quantenschicht. Mit einer Entspiegelungbeschichtung auf dem Resonatorspiegel mit dem Sättigbaren Absorber wurden im Vergleich kürzere Impulsdauern gemessen.

Eine weitere vorteilhafte Ausgestaltung der Erfindung besteht darin, daß das Substrat aus Indiumphosphid (InP) besteht und der Bragg-Reflektor aus Einzelschichten besteht, die jeweils eine Dicke haben, die für das erste Material mit dem Brechungsindex $n_H$ mit Indium-Galliumarsenid

$$(In_{1-y}Ga_yAs) \frac{\lambda_L}{4*n_{InGaAs}}$$

und die für das zweite Material mit dem niedrigeren Brechungsindex $n_L$ mit Indiumphosphid

$$(InP) \frac{\lambda_L}{4*n_{InP}}$$

betragen. Die Einfach-Quantenschicht besteht auch aus Indium-Galliumarsenid $(In_{1-x}Ga_xAs)$, wobei deren Schichtdicke im Bereich von 6 nm bis 10 nm liegt und deren Zusammensetzung (x) durch die Laserwellenlänge $\lambda_L$ bestimmt sind. Auch hier bestimmt der Galliumanteil (x) die Größe der Bandlücke. Der Bragg-Reflektor besteht hier aus jeweils 30 bis 100 Einzelschichten. In den Indium-Galliumarsenid-Schichten des Bragg-Reflektors beträgt der Galliumanteil y = 47 % um Gitteranpassung zu den Indiumphosphid-Schichten zu erhalten. Dieser Resonatorspiegel eignet sich fiir Laserwellenlängen $\lambda_L$ größer 1,65 µm.

Hier ist die Einfach-Quantenschicht entweder zwischen zwei Schichten aus Indium-Galliumarsenid oder zwei Schichten aus Indiumphosphid eingebettet.

Eine weitere vorteilhafte Ausgestaltung der Erfindung besteht darin, daß das Substrat aus Indiumphosphid (InP) besteht und der Bragg-Reflektor aus Einzelschichten besteht, die jeweils eine Dicke haben, die für das erste Material mit dem Brechungsindex $n_H$ mit Indium-Galliumarsenid-Phosphid

$$(In_{1-y}Ga_yAs_zP_{1-z}) \frac{\lambda_L}{4*n_{InGaAsP}}$$

und die für das zweite Material mit dem niedrigeren Brechungsindex $n_L$ mit Indiumphosphid

$$(InP) \frac{\lambda_L}{4*n_{InP}}$$

betragen, und die Einfach-Quantenschicht aus Indium-Galliumarsenid $(In_{1-x}Ga_xAs)$ besteht, wobei deren Schichtsdicke und Zusammensetzung durch die Laserwellenlänge $\lambda_L$ bestimmt sind. Insbesondere werden der Galliumanteil y und der Arsenanteil z durch die Beziehung y = 0,4 z+0,067$z^2$ bestimmt, um eine Gitteranpassung zwischen den Indium-Galliumarsenid-Phosphid-Schichten $(In_{1-y}Ga_yAs_zP_{1-z})$ und den Indiumphosphid-Schichten (InP) des Bragg-Reflektors zu erreichen. In Abhängigkeit vom Galliumanteil euignet sich dieser Resonatorspiegel für Laserwellenlängen $\lambda_L$ größer 1,3 µm. Da jedoch der Brechzahlunterschied im Schichtaufbau des Bragg-Reflektors vergleichsweise gering ist müssen hier mehr Spiegelpaare verwendet werden, um eine gleiche Reflektivität zu erreichen. Typischer Weise sind 40 bis 100 Spiegelpaare für eine Funktion in einem Laserresonator notwendig.

Auch hier ist die Einfach-Quantenschicht entweder zwischen zwei Schichten aus Indium-Galliumarsenid-Phosphid oder zwischen zwei Schichten aus Indiumphosphid eingebettet.

Die Erfindung wird nachfolgend an Hand von Figuren beschrieben. Es zeigen:

Fig. 1: Prinzipieller Aufbau des Resonatorspiegels mit einer Einfach-Quantenschicht innerhalb hochbrechender Schichten

Fig. 2: Prinzipieller Aufbau des Resonatorspiegels mit einer Einfach-Quantenschicht innerhalb niedrigbrechender Schichten

Fig. 3: Aufbau des Resonatorspiegels mit einem Sättigbaren Absorber auf Basis eines GaAs/AlAs-Systems

Fig. 4: Lage einer Einfach-Quantenschicht innerhalb einer als Sättigbarer Absorber wirkenden Dreifach-Schicht gemäß Fig. 3

Fig. 5: Eine andere Lage einer Einfach-Quantenschicht innerhalb einer als Sättigbarer Absorber wirkenden Dreifach-Schicht gemäß Fig. 3

Fig. 6: Aufbau des Resonatorspiegels mit einem Sättigbaren Absorber auf Basis eines InGaAs/InP-Systems

Fig. 7: Aufbau des Resonatorspiegels mit einem Sättigbaren Absorber auf Basis eines InGaAsP/InP-Systems

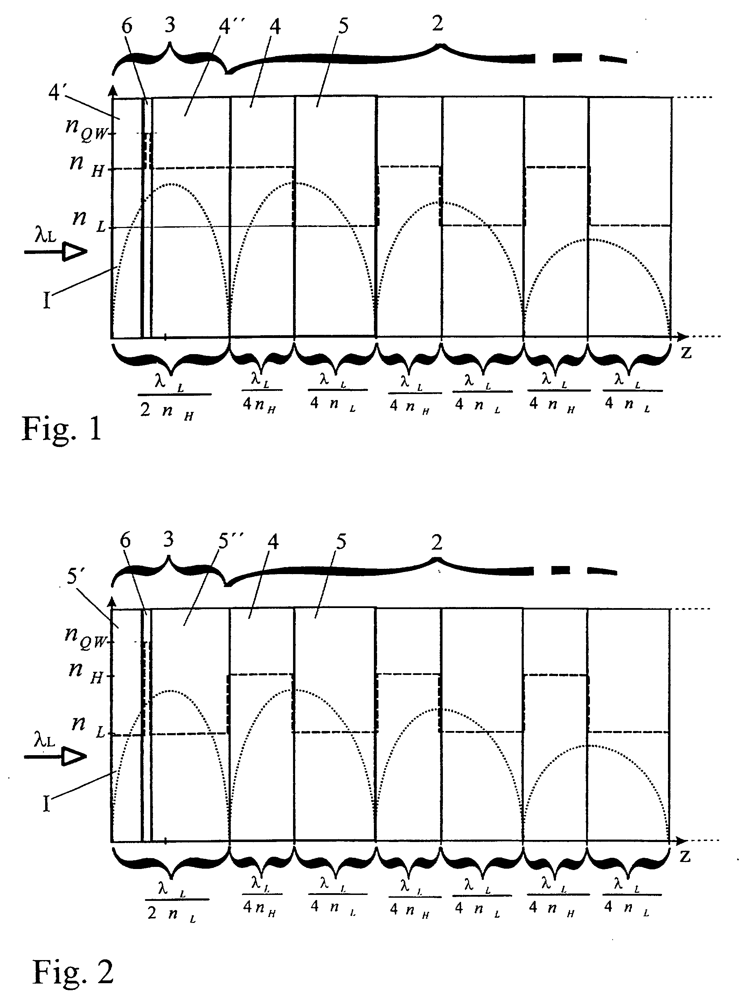

**Fig. 1** zeigt den prinzipiellen Schichtaufbau eines Resonatorspiegels mit einer einfach Quantenschicht 6, die zwischen zwei hochbrechenden Schichten 4' und 4''angeordnet ist, entlang einer Koordinate z. Auf einem Substrat (hier nicht dargestellt) sind mehrere Schichtpaare aus einem Material 4 mit einem höheren Brechungsindex $n_H$ und aus einem Material 5 mit einem niedrigeren Brechungsindex $n_L$ aufgebaut, die einen Bragg-Reflektor 2 bilden. Die Dicken der Einzelschichten ergeben sich aus den Brechzahlen der Materialien 4 und 5 für die jeweilge Laserwellenlänge $\lambda_L$ zu $\frac{\lambda_L}{4*n_H}$ und $\frac{\lambda_L}{4*n_L}$.

In Richtung der in den Resonatorspiegel einfallenden Laserstrahlung $\lambda_L$ gesehen, ist auf der ersten Schicht aus dem Material 4 mit dem hohen Brechungsindex $n_H$ des Bragg-Reflektors 2 eine Dreifach-Schicht 3 als Sättigbarer Absorber aufgebracht. Diese Dreifach-Schicht 3 enthält die Einfach-Quantenschicht 6. Diese ist zwischen den zwei Schichten 4' und 4'' hoher Brechzahl $n_H$ eingebettet, wobei die Gesamtdicke der Dreifach-Schicht 6 durch $\frac{\lambda_L}{2*n_H}$ gegeben ist. Die Schichten 4' und 4'' sollten aus einem gleichen Material bestehen, müssen jedoch nicht mit dem Material 4 mit dem hohen Brechungsindex identisch sein.

Die Materialzusammensetzung und die Dicke der Einfach-Quantenschicht 6 werden entsprechend ihrer sättigbar absorbierenden Wirkung für die Laserwellenlänge festgelegt. Die Dicken der diese einhüllenden Schichten 4' und 4" werden so eingestellt, daß sich eine Gesamtdicke der Dreifach-Schiciht von $\frac{\lambda_L}{2*n}$ ergibt (siehe auch Ausführungen am Beispiel zu Fig.3 und Fig.4). Die Brechzahl $n_{QW}$ der Einfach-Quantenschicht 6 ist für die Funktion des Sättigbaren Absorbers von untergeordneter Bedeutung. Für die Funktion der Einfach-Quantenschicht 6 mit sättigbar absorbierender Wirkung zur Erzeugung kurzer Laserpulse ist es jedoch von Bedeutung, an welchem Ort diese innerhalb der Dreifach-Schicht 3 liegt.

In Verbindung mit dem in Richtung z der einfallenden Laserstrahlung $\lambda_L$ gesehen, nachgeordneten Bragg-Reflektor ergibt sich eine Intensitätsverteilung I im Resonatorspiegel, wie diese in Figuren 1 bis 7 als gepunktete Linien prinzipiell dargestellt sind. Die gestrichelten Linien in Fig. 1 und Fig. 2 stellen den Brechzahlverlauf im Schichtsystem des Resonatorspiegels schematisch dar.

**Fig. 2** zeigt den prinzipiellen Schichtaufbau eines Resonatorspiegels mit einer Einfach-Quantenschicht, die zwischen zwei niedrigbrechenden Schichten 5' und 5" angeordnet ist. Auf einem Substrat (hier nicht dargestellt) sind ebenfalls mehrere Schichtpaare aus dem Material 4 mit einem höheren Brechungsindex $n_H$ und aus dem Material 5 mit einem niedrigeren Brechungsindex $n_L$ aufgebaut. die den Bragg-Reflektor 2 bilden.

In Richtung der in den Resonatorspiegel einfallenden Laserstrahlung $\lambda_L$ gesehen, ist auf der ersten Schicht aus dem Material 4 mit dem hohen Brechungsindex $n_H$ des Bragg-Reflektors 2 ebenfalls die Dreifach-Schicht 3 als Sättigbarer Absorber aufgebracht. Diese Dreifach-Schicht 3 enthält die Einfach-Quantenschicht 6. Diese ist zwischen zwei Schichten 5'und 5" mit niederer Brechzahl $n_L$ eingebettet, wobei die Gesamtdicke der Dreifach-Schicht 3 durch $\frac{\lambda_L}{2*n}$ gegeben ist. Die Ausführungen zu Fig. 1 gelten in analoger Weise auch zu Fig. 2.

**Fig. 3** zeigt den Schichtaufbau eines Resonatorspiegels mit einem Sättigbaren Absorber im Materialsystem Galliumarsenid/Aluminiumarsenid. Auf einem Substrat 1 aus Galliumarsenid sind 28 Schichtpaare aus undotiertem Aluminiumarsenid (Material mit niederer Brechzahl 5) und aus undotiertem Galliumarsenid (Material mit hoher Brechzahl 4) aufgebracht, die den Bragg-Reflektor 2 bilden, der für die Laserwellenlänge $\lambda_L$ = 1064 nm ausgelegt ist und diese zu 98,77% reflektiert.

Die Berechnung des Bragg-Reflektors kann nach *Orazio Svelto: Prinziples of Lasers "Plenum Press, fourth edition 1998*). Die Schichtdicken der Einzelschichten sind für die für Galliumarsenid

$$\frac{\lambda_L}{4*n_{GaAs}}$$

mit jeweils 76 nm und die für Aluminiumarsenid

$$\frac{\lambda_L}{4*n_{AlAs}}$$

mit jeweils 90 nm bestimmt. In Richtung der in den Resonatorspiegel einfallenden Laserstrahlung $\lambda_L$ gesehen ist auf der ersten Schicht aus Galliumarsenid des Bragg-Reflektors 2 eine Dreifach-Schicht 3 als Sättigbarer Absorber aufgebracht.

**Fig. 4** zeigt diese Dreifach-Schicht 3. Sie enthält eine Einfach-Quantenschicht 6 aus einer $d_3$ = 7 nm dicken Indium-Galliumarsenid-Schicht. Diese ist zwischen jeweils einer der zwei Galliumarsenid-Schichten (Material mit hoher Brechzahl 4' und 4") eingebettet. Die Dicke dieser Dreifach-Schicht 3 wird nach der Formel

$$d_{ges} = d_1 + d_2 + d_3 = \frac{\lambda_L}{2*n_{GaAs}} - d_3\left(\frac{n_{QW}}{n_{GaAs}} - 1\right)$$

berechnet, wobei $d_1$ und $d_2$ die Schichtdicken der Galliumarsenidschichten (Material 4'und 4"), $d_3$ = 7 nm die Dicke der Einfach-Quantensicht 6 sind und die Brechzahl $n_{QW}$ der Einfach-Quantenschicht aus Indium-Galliumarsenid empirisch mit 3,6 ermittelt wurde. Die Berechnung ergibt eine exakte Dicke der Dreifach-Schicht 3 zu 152,1 nm. Rechnet man mit der Näherung

$$d_{ges} = \frac{\lambda_L}{2*n_{GaAs}}$$

ergibt sich ein Wert von 152,3 nm. Aus der Größe der Differenz von 0,2 nm ist zu sehen, daß die Näherung gültig ist und praktisch ausreichende Ergebnisse erreicht werden. Dies ist insbesondere daher von Bedeutung, da der Wachstumsprozeß nur mit einer Reproduzierbarkeit im Nanometerbereich sicher beherrscht wird. Diese Betrachtungen gelten auch allgemein, im Zusammenhang mit den wesentlichen Merkmalen der Erfindung.

Diese zwei Galliumarsenid-Schichten (4' und 4") sind zusammen $d_1 + d_2$ = 145 nm dick. Zusammen mit der Dicke der Einfach-Quantenschicht $d_3$ bilden diese eine einfache $\lambda/2$-Schicht (mit i = 1) mit der Dicke $d_{ges} = d_1 + d_2 + d_3$ = 152 nm.

Gemäß der Erfindung wird nun die Indium-Galliumarsenid-Schicht (6) innerhalb der diese umgebenden Galliumarsenid-Schichten (4' und 4") so positioniert, daß einerseits die gewünschte sättigbar absorbierende Wirkung zur Modensynchronisation innerhalb einer Laserkavität erreicht wird und andererseits eine Grenze der Leistungsfestigkeit der Indium-Galliumarsenid-Schicht (6) nicht überschritten wird. Als Antireflexionsschicht 10 wird hier eine Siliziumnitrid-Schicht (SiN) entsprechender Dicke verwendet.

Im Beispiel nach **Fig. 4** ist die 7 nm dicke Indium-Galliumarsenid-Schicht (6) in der Mitte, zwischen den beiden jeweils 73 nm dicken Galliumarsenid-Schichten (4' und 4'') im Intensitätsmaximum angeordnet.

Diese Stellung wird gewählt, wenn es das Design des Laserresonators erlaubt, bei einer gewünschten hohen Ausgangsleistung einen ausreichend großen Spot auf dem Resonatorspiegel zu erzeugen, der so bemessen ist, daß die Energiedichte auf dem Resonatorspiegel mit dem Sättigbaren Absorber sicher unterhalb der Zerstörschwelle liegt.

Die Einfach-Quantenschicht 6 kann nun gemäß der Erfindung im Prozeß der Herstellung der Dreifach-Schicht 3 in Richtung der Laserstrahlung bis zu einer Grenze 8 oder gegen die Richtung der Laserstrahlung bis zu einer Grenze 9 verschoben werden. Diese Grenzen liegen etwa bei einer Dicke von $\frac{\lambda_L}{100}$, bei der Laserwellenlänge 1064 nm in der Größenordnung von 10 nm. Die Grenzen 9 und 10 ergeben sich praktisch aus der minimalen Dicke der Galliumarsenid-Schicht, die erforderlich ist, um die Einfach-Quantenschicht als Sättigbaren Absorber wirksam zu machen. Es muß eine ausreichende Energiedichte in der Einfach-Quantenschicht 4 wirksam werden, um diese zu einer ausreichende Sättigung zu bringen, damit die gewünschte sättigbar absorbierende Wirkung eintritt. Die optimale Stelle für die Einbettung der Einfach Quantenschicht innerhalb der Dreifach-Schicht 3 kann letzlich aber nur in der konkreten Anordnung im jeweilig dimensionierten Laserresonator ermittelt werden.

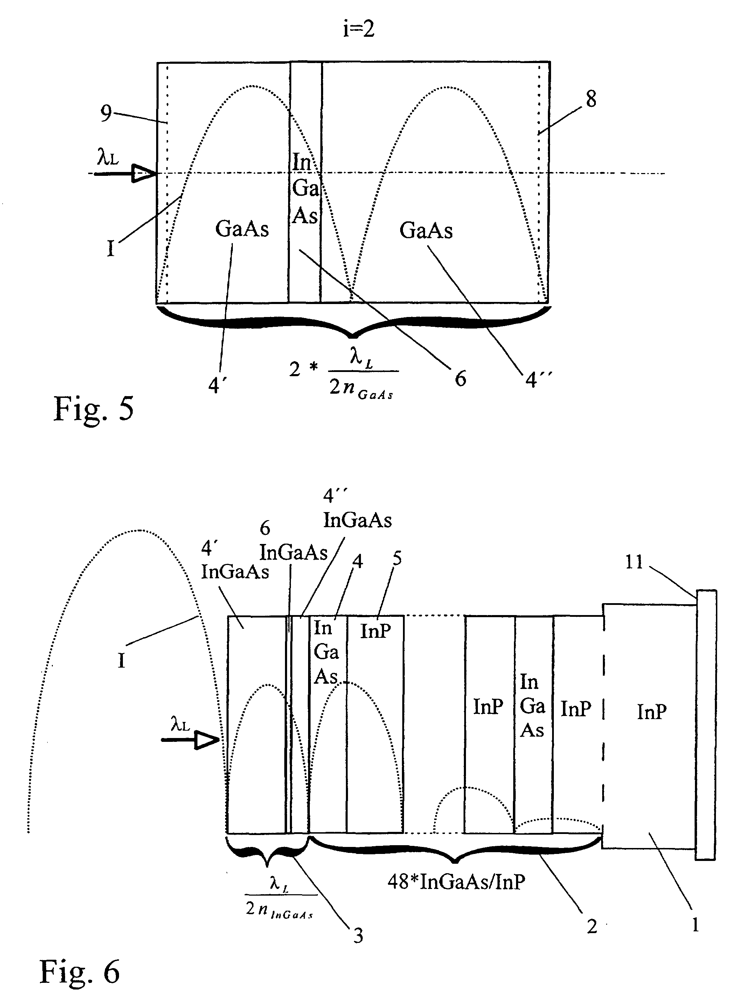

**Fig. 5** zeigt ein Beispiel, bei dem die 7 nm dicke Einfach-Quantenschicht 4 innerhalb zweier Galliumarsenid-Schichten (4' und 4'') liegt, wobei die Dreifach-Schicht 3 304 nm dick ist. In

$$\text{der Formel } i * \frac{\lambda_L}{2 * n_{GaAs}}$$

ist i = 2 gewählt. Die Einfach-Quantensicht ist hier in einem Bereich angeordnet, in dem die Intensität der Laserstrahlung etwa die der Hälfte des Intensitätsmaximums beträgt.

Die in Richtung der Laserstrahlung erste Galliumarsenid-Schicht (4') ist 80 nm dick und die in Richtung des Laserlichts nach der Einfach-Quantenschicht 6 angeordnete Galliumarsenid-Schicht (4'') ist 217 nm dick. In Verbindung mit dem in Richtung der Laserstrahlung gesehen nachgeordneten Bragg-Reflektor ergibt sich eine Intensitätsverteilung I wie diese in Fig. 5 als gepunktete Linie dargestellt ist.

**Fig. 6** zeigt einen Resonatorspiegel mit einem Sättigbaren Absorber auf der Basis eines Schichtsystems Indium-Galliumarsenid/Indiumphosphid, der dem System von Fig. 1 entspricht. Die Einfach-Quantenschicht 6 ist hier in die hochbrechenden Indium-Galliumarsenid-Schichten (4' und 4'') eingebettet.

In Verbindung mit dem in Richtung der Laserstrahlung gesehen nachgeordneten Bragg-Reflektor ergibt sich eine Intensitätsverteilung I wie diese in Fig. 4 als gepunktete Linie dargestellt ist. Dieser Aufbau funktioniert nur für Laserwellenlängen $\lambda_L > 1,65$ µm, weil $In_{0,53}Ga_{0,47}As$ für kürzere Wellenlängen nicht mehr transparent ist.

Fig. 6 zeigt eine mit dem Substrat 1 thermisch leitfähig verbundene Wärmesenke 11. Die Wärmesenke ist mit einer Temperaturmeß- und Steuereinrichtung verbunden und reguliert den Wärmehaushalt des Reflektors mit dem Sättigbaren Absorber während seines Betriebes in einem Laserresonator.

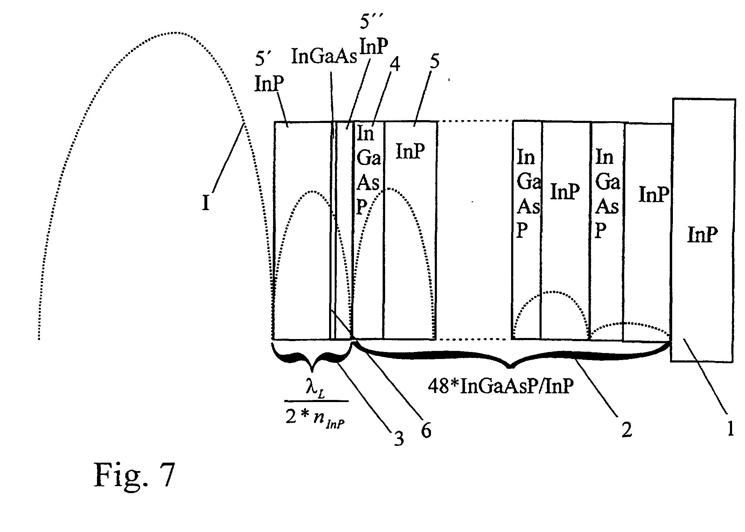

**Fig. 7** zeigt beispielhaft einen weiteren Resonatorspiegel, der hier auf der Basis eines Indium-Gallium-Arsenidphosphid-Schichtsystem 4 und 5 aufgebaut ist und auf dem System gemäß Fig. 2 beruht. Die Einfach-Quantenschicht 6 ist hier in die niedrigbrechenden Indiumphosphid-Schichten (5' und 5'') eingebettet.

Dieser Aufbau funktioniert für Laserwellenlängen $\lambda_L > 1,3$ µm, je nach Zusammensetzung des Indium-Galliumarsenidphosphid $(In_{1-y}Ga_yAs_zP_{1-z})$.

Die Auswahl der hier genannten Schichtsysteme ist beispielhaft. Je nach Laserwellenlänge $\lambda_L$ kann der Fachmann entsprechend transparente Materialien für den Bragg-Reflektor und ein Material für die Einfach-Quantenschicht mit einer entsprechenden Bandlücke und Dicke, sowie das Material für die Einbettung der Einfach-Quantenschicht auswählen, deren Kombination so erfolgen muß, daß ein mechanisch und chemisch stabiles, über die Fläche weitestgehend homogenes Schichtsystem entsteht, das für die Laserwellenlänge ausreichend leistungsfest ist.

**Patentansprüche**

1. Resonatorspiegel mit einem sättigbaren Absorber für Laserstrahlung einer Laserwellenlänge ($\lambda_L$) zur Verwendung in einem Festkörperlaserresonator mit einer Ausgangsleistung von größer 1 Watt, wobei auf einer Oberfläche eines Substrates (1) ein Bragg-Reflektor (2) aufgewachsen ist, welcher aus einer Vielzahl alternierend angeordneter Halbleiterschichten aus einem ersten Material (4) mit einem ersten Brechungsindex ($n_H$) und aus einem zweiten Material (5) mit einem zweiten Brechungsindex ($n_L$), der niedriger als der erste Brechungsindex ($n_H$) ist, besteht, wobei direkt auf dem Bragg-Reflektor (2) eine Dreifach-Schicht (3) aufgewachsen ist, bei der eine Einfach-Quantenschicht (6) innerhalb von zwei Schichten (4', 4''; 5', 5'') aus dem ersten Material (4', 4'') oder aus dem zweiten Material (5', 5'') und außerhalb eines Intensitätsminimums für die Laserstrahlung eingebettet ist, wobei die Dreifach-Schicht (3) ein ganzzahliges Vielfaches von $\frac{\lambda_L}{2}$ optisch dick ist, und wobei $\lambda_L$ die Laserwellenlänge und eine Entspiegelungsbeschichtung (10) auf der Dreifach-Schicht (3) aufgebracht ist, die für die Laserwellenlänge ($\lambda_L$) ausgelegt ist.

2. Resonatorspiegel nach Anspruch 1, **dadurch gekennzeichnet, daß** Einfache, Zweifache oder Dreifache von $\frac{\lambda_L}{2}$ optisch dick ist.

3. Resonatorspiegel nach Anspruch 1 oder 2, **dadurch gekennzeichnet, daß** eine der beiden Schichten, die die Einfach-Quantenschicht (6) einbetten, eine Mindestdicke ($d_1$; $d_2$) von $\frac{\lambda_L}{100}$ aufweist.

4. Resonatorspiegel nach einem oder mehreren der Ansprüche 1 bis 3, **dadurch gekennzeichnet, daß** die Einfach-Quantenschicht (6) außerhalb eines Intensitätsmaximums der Laserstrahlung angeordnet ist.

5. Resonatorspiegel nach Anspruch 1, **dadurch gekennzeichnet, daß** die Einfach-Quantenschicht (6) eine Niedrig-Temperatur-Schicht ist, die insbesondere aus einem der Materialsysteme Indium-Gallium-Arsen (InGaAs) oder Gallium-Arsen-Antimon (GaAsSb) oder Gallium-Stickstoff-Arsen (GaNAs) besteht.

6. Resonatorspiegel nach einem oder mehreren der Ansprüche 1 bis 5, **dadurch gekennzeichnet, daß** die Dicke der Dreifach-Schicht (3) $\frac{\lambda_L}{2*n_H}$ bzw. $\frac{\lambda_L}{2*n_L}$ beträgt und $n_H$ der erste Brechungsindex, $n_L$ der zweite Brechungsindex und $\lambda_L$ die Laserwellenlänge ist.

7. Resonatorspiegel nach Anspruch 6, **dadurch gekennzeichnet, daß** das Substrat (1) aus Galliumarsenid (GaAs) besteht, das erste Material des Bragg-Reflektors (2) undotiertes Galliumarsenid (GaAs) ist und die daraus gebildeten Schichten jeweils eine Dicke von $\frac{\lambda_L}{4*n_H}$ aufweisen und das zweite Material des Bragg-Reflektors (2) undotiertes Aluminiumarsenid (AlAs) ist und die daraus gebildeten Schichten jeweils eine Dicke von $\frac{\lambda_L}{4*n_L}$ aufweisen.

8. Resonatorspiegel nach Anspruch 7, **dadurch gekennzeichnet, daß** die Einfach-Quantenschicht (6) in Galliumarsenid (4', 4") eingebettet ist.

9. Resonatorspiegel nach Anspruch 6, **dadurch gekennzeichnet, daß** das Substrat (1) aus Indiumphosphid (InP) besteht, das erste Material des Bragg-Reflektors (2) Indium-Galliumarsenid ($In_{1-y}Ga_yAs$) ist und die daraus gebildeten Schichten jeweils eine Dicke von $\frac{\lambda_L}{4*n_H}$ aufweisen und das zweite Material des Bragg-Reflektors (2) Indiumphosphid (InP) ist und die daraus gebildeten Schichten jeweils eine Dicke von $\frac{\lambda_L}{4*n_L}$ aufweisen.

10. Resonatorspiegel nach Anspruch 9, **dadurch gekennzeichnet, daß** die Einfach-Quantenschicht (6) zwischen zwei Schichten aus Indium-Galliumarsenid (4', 4") oder Indiumphosphid (5', 5") eingebettet ist.

11. Resonatorspiegel nach Anspruch 6, **dadurch gekennzeichnet, daß** das Substrat (1) aus Indiumphosphid (InP) besteht, das erste Material des Bragg-Reflektors (2) Indium-Galliumarsenid-Phosphid ($In_{1-y}Ga_yAs_zP_{1-z}$) ist und die daraus gebildeten Schichten jeweils eine Dicke von $\frac{\lambda_L}{4*n_H}$ aufweisen und das zweite Material (5) Indiumphosphid (InP) ist und die daraus gebildeten Schichten jeweils eine Dicke von $\frac{\lambda_L}{4*n_L}$ aufweisen.

12. Resonatorspiegel nach Anspruch 11, **dadurch gekennzeichnet, daß** die Einfach-Quantenschicht (6) zwischen zwei Schichten aus Indium-Galliumarsenid-Phosphid (4', 4") oder Indiumphosphid (5', 5") eingebettet ist.

13. Resonatorspiegel nach Anspruch 7 oder 9 oder 11, **dadurch gekennzeichnet, daß** die Einfach-Quantenschicht (6) aus Indium-Galliumarsenid ($In_{1-x}Ga_xAs$) besteht, deren Schichtdicke und Zusammensetzung (x) durch die Laserwellenlänge ($\lambda_L$) bestimmt sind.

14. Resonatorspiegel nach einem oder mehreren der Ansprüche 1 bis 13, **dadurch gekennzeichnet, daß** das Substrat (1) mit einer Wärmesenke (11) thermisch leitfähig verbunden ist, deren Solltemperatur einstellbar und regelbar ist.

15. Festkörperlaserresonator mit einem Resonatorspiegel mit einem sättigbaren Absorber für Laserstrahlung einer Laserwellenlänge ($\lambda_L$), wobei auf einer Oberfläche eines Substrates (1) ein Bragg-Reflektor (2) aufgewachsen ist, welcher aus einer Vielzahl alternierend angeordneter Halbleiterschichten aus einem ersten Material (4) mit einem ersten Brechungsindex ($n_H$) und aus einem zweiten Material (5) mit einem zweiten Brechungsindex ($n_L$), der niedriger als der erste Brechungsindex ($n_H$) ist, besteht, wobei direkt auf dem Bragg-Reflektor (2) eine Dreifach-Schicht (3) aufgewachsen ist, bei der eine Einfach-Quantenschicht (6) innerhalb von zwei Schichten (4', 4"; 5', 5") aus dem ersten Material (4', 4") oder aus dem zweiten Material (5', 5") und außerhalb eines Intensitätsminimums für die Laserstrahlung eingebettet ist, und wobei die Dreifach-Schicht (3) ein ganzzahliges Vielfaches von $\frac{\lambda_L}{2}$ optisch dick ist, wobei $\lambda_L$ die Laserwellenlänge ist, **dadurch gekennzeichnet, daß** eine Entspiegelungsbeschichtung (10) auf der Dreifach-Schicht (3) aufgebracht ist, die für die Laserwellenlänge ($\lambda_L$) ausgelegt ist, und daß die Ausgangsleistung des Festkörperlaserresonator größer 1 Watt ist.

**Claims**

1. Resonator mirror with a saturable absorber for laser radiation in a laser wavelength ($\lambda_L$) for use in a sold-state laser resonator with an output power of more than 1 watt whereby a Bragg reflector (2) is grown on a surface of a substrate (1) whereby the reflector comprises a plurality of alternately arranged semiconductor layers of a first material (4) with a first refractive index ($n_H$) and a second material (5) with a second refractive index ($n_L$) which is lower than the first refractive index ($n_H$), whereby a triple layer (3) is grown directly on the Bragg reflector (2) in which a single quantum layer (6) is embedded within two layers (4', 4", 5' 5") made of the first material (4', 4") or the second material (5', 5") and outside an intensity minimum for the laser radiation, whereby the triple layer (3) has an optical thickness of a integral multiple of $\frac{\lambda_L}{2}$ and whereby $\lambda_L$ is the laser wavelength and an antireflection coating (10) is applied to the triple layer (3) which is designed for the laser wavelength ($\lambda_L$).

2. Resonator mirror according to claim 1 **characterised in that** the optical thickness of the triple layer (3) is once, twice or three times $\frac{\lambda_L}{2}$.

3. Resonator mirror according to either one of claims 1 or 2 **characterised in that** one of the two layers embedding the single quantum layer (6) has a minimum thickness ($d_1$, $d_2$) $\frac{\lambda_L}{100}$.

4. Resonator mirror according to one or more of claims 1 to 3 **characterised in that** the single quantum layer (6) is arranged outside an intensity maximum of the laser radiation.

5. Resonator mirror according to claim 1 **characterised in that** the single quantum layer (6) is a low-temperature layer comprising in particular one of the material systems indium gallium arsenic (InGaAs) or gallium arsenic antimony (GaAsSb) or gallium nitrogen arsenic (GaNAs).

6. Resonator mirror according to one or more of claims 1 to 5 **characterised in that** the thickness of the triple layer (3) is $\frac{\lambda_L}{2*n_H}$ or $\frac{\lambda_L}{2*n_L}$ and $n_H$ is the first refractive index, $n_L$ is the second refractive index and $\lambda_L$ is the laser wavelength.

7. Resonator mirror according to claim 6 **characterised in that** the substrate (1) comprises gallium arsenide (GaAs), the first material of the Bragg reflector (2) is undoped gallium arsenide (GaAs) and the layers formed therefrom each have a thickness of $\frac{\lambda_L}{4*n_H}$ and the second material of the Bragg reflector (2) is undoped aluminium arsenide (AlAs) and the layers formed therefrom each have a thickness of $\frac{\lambda_L}{4*n_L}$.

8. Resonator mirror according to claim 7 **characterised in that** the single quantum layer (6) is embedded in gallium arsenide (4', 4").

9. Resonator mirror according to claim 6 **characterised in that** the substrate (1) comprises indium phosphide (InP), the first material of the Bragg reflector (2) is indium gallium arsenide ($In_{1-y}Ga_yAs$) and the layers formed therefrom each have a thickness of $\frac{\lambda_L}{4*n_H}$ and the second material of the Bragg reflector (2) is indium phosphide (InP) and the layers formed therefrom each have a thickness of $\frac{\lambda_L}{4*n_L}$.

10. Resonator mirror according to claim 9 **characterised in that** the single quantum layer (6) is embedded between two layers made of indium gallium arsenide (4', 4") or indium phosphide (5', 5").

11. Resonator mirror according to claim 6 **characterised in that** the substrate (1) comprises indium phosphide (InP), the first material of the Bragg reflector (2) is indium gallium arsenide phosphide ($In_{1-y}Ga_yAS_zP_{1-z}$) and the layers formed therefrom each have a thickness of $\frac{\lambda_L}{4*n_H}$ and the second material (5) is indium phosphide (InP) and the layers formed therefrom each have a thickness of $\frac{\lambda_L}{4*n_L}$.

12. Resonator mirror according to claim 11 **characterised in that** the single quantum layer (6) is embedded between two layers made of indium gallium arsenide phosphide (4', 4") or indium phosphide (5', 5").

13. Resonator mirror according any one of claims 7, 9 or 11 **characterised in that** the single quantum layer (6) comprises indium gallium arsenide ($In_{1-x}Ga_x$-As) whose layer thickness and composition (x) is determined by the laser wavelength ($\lambda_L$).

14. Resonator mirror according to one or more of claims 1 to 13 **characterised in that** the substrate (1) has a thermally conductive connection to a heat sink (11) with. an adjustable and controllable nominal temperature.

15. Solid-state laser resonator with a resonator mirror with a saturable absorber for laser radiation of a laser wavelength ($\lambda_L$) whereby a Bragg reflector (2) is grown on a surface of a substrate (1) whereby the reflector comprises a plurality of alternately arranged semiconductor layers of a first material (4) with a first refractive index ($n_H$) and a second material (5) with a second refractive index ($n_L$) which is lower than the first refractive index ($n_H$), whereby a triple layer (3) is grown directly on the Bragg reflector (2) in which a single quantum layer (6) is embedded within two layers (4', 4", 5' 5") made of the first material (4', 4") or the second material (5', 5") and outside an intensity minimum for the laser radiation, whereby the triple layer (3) has an optical thickness of a integral multiple of $\frac{\lambda_L}{2}$ and whereby $\lambda_L$ is the laser wavelength **characterised in that** an antireflection coating (10) is applied to the triple layer (3) which is designed for the laser wavelength ($\lambda_L$) and the output power of the solid-state laser resonator is greater than 1 watt.

## Revendications

1. Miroir de cavité avec un absorbant saturable pour le rayonnement laser d'une longueur d'onde de laser ($\lambda_L$) pour l'utilisation dans une cavité de laser à solide avec une puissance de sortie supérieure à 1 watt, dans lequel un réflecteur de Bragg (2) s'est développé à la surface d'un substrat (1), qui est constitué d'un grand nombre de couches de semi-conducteurs disposées en alternance à base d'un premier matériau (4) possèdant un premier indice de réfraction ($n_H$) et d'un deuxième matériau (5) possèdant un deuxième indice de réfraction ($n_L$), qui est inférieur au premier indice de réfraction ($n_H$), une couche triple (3) s'étant développé directement sur le réflecteur de Bragg (2), avec laquelle une couche quantique simple (6) est enrobée à l'intérieur de deux couches (4', 4", 5', 5") à base du premier matériau (4', 4") ou à base du second matériau (5', 5") et en dehors d'un minimum d'intensité pour le rayonnement laser, la couche triple (3) ayant une épaisseur optique représentant un multiple entier de $\lambda_L/2$, $\lambda_L$ étant la longueur d'onde de laser et un revêtement antireflet (10) étant appliqué sur la couche triple (3) qui est conçue pour la longueur d'onde ($\lambda_L$).

2. Miroir de cavité selon la revendication 1, **caractérisé en ce que** la couche triple (3) a une épaisseur optique égale à une fois, deux fois ou trois fois $\lambda_L/2$.

3. Miroir de cavité selon la revendication 1 ou 2, **caractérisé en ce que** l'une des deux couches, qui enrobent la couche quantique simple (6), présente une épaisseur minimale ($d_1$ ; $d_2$) de $\lambda_L/100$.

4. Miroir de cavité selon l'une quelconque ou plusieurs des revendications 1 à 3, **caractérisé en ce que** la couche quantique simple (6) est disposée en dehors d'un maximum d'intensité du rayonnement laser.

5. Miroir de cavité selon la revendication 1, **caractérisé en ce que** la couche quantique simple (6) est une couche à faible température, qui est constituée en particulier par l'un des systèmes de matériau indium-gallium-arsenic (InGaAs) ou gallium-arsenic-antimoine (GaAsSb) ou gallium-azote-arsenic (Ga-NAs).

6. Miroir de cavité selon l'une quelconque ou plusieurs des revendications 1 à 5, **caractérisé en ce que** l'épaisseur de la couche triple (3) est $\lambda_L/2*n_H$ ou $\lambda_L/2*n_L$ et $n_H$ est le premier indice de réfraction, $n_L$ le deuxième indice de réfraction et $\lambda_L$ la longueur d'onde de laser.

7. Miroir de cavité selon la revendication 6, **caractérisé en ce que** le substrat (1) est à base d'arseniure de gallium (GaAs), le premier matériau du réflecteur de Bragg (2) est de l'arseniure de gallium (GaAs) non dopé et les couches formées à partir de ce matériau présentent chacune une épaisseur de $\lambda_L/4*n_H$ et le second matériau du réflecteur de Bragg (2) est de l'arseniure d'aluminium (AlAs) non dopé et les couches formées à partir de ce matériau présentent chacune une épaisseur de $\lambda_L/4*n_L$.

8. Miroir de cavité selon la revendication 7, **caractérisé en ce que** la couche quantique simple (6) est enrobée dans de l'arseniure de gallium (4', 4").

9. Miroir de cavité selon la revendication 6, **caractérisé en ce que** le substrat (1) est à base de phosphure d'indium (InP), le premier matériau du réflecteur de Bragg est de l'arseniure de gallium et d'indium ($In_{1-y}Ga_yAs$) et les couches formées à partir de ce matériau présentent chacune une épaisseur $\lambda_L/4*n_H$ et le second matériau du réflecteur de Bragg (2) est du phosphure d'indium (InP) et les couches formées à partir de ce matériau présentent chacune une épaisseur de $\lambda_L/4*n_L$.

10. Miroir de cavité selon la revendication 9, **caractérisé en ce que** la couche quantique (6) est enrobée entre deux couches à base d'arseniure d'indium et de gallium (4', 4") ou de phosphure d'indium (5', 5").

11. Miroir de cavité selon la revendication 6, **caractérisé en ce que** le substrat (1) est à base de phosphure d'indium (InP), le premier matériau du réflecteur de Bragg est de l'arseniure de phosphure d'indium et de gallium ($In_{1-y}Ga_yAs_zP_{1-z}$) et les couches formées à partir de ce matériau présentent chacune une épaisseur de $\lambda_L/4*n_H$ et le second matériau (5) est du phosphure d'indium (InP) et les couches formées à partir de ce matériau présentent chacune une épaisseur de $\lambda_L/4*n_L$.

**12.** Miroir de cavité selon la revendication 11, **caractérisé en ce que** la couche quantique simple (6) est enrobée entre deux couches à base d'arseniure phosphure d'indium et de gallium (4', 4") ou de phosphure d'indium (5', 5").

**13.** Miroir de cavité selon la revendication 7 ou 9 ou 11, **caractérisé en ce que** la couche quantique simple (6) est à base d'arseniure d'indium et de gallium ($In_{1-x}Ga_xAs$), dont l'épaisseur de couche et la composition (x) sont déterminées par la longueur d'onde de laser ($\lambda_L$).

**14.** Miroir de cavité selon l'une quelconque ou plusieurs des revendications 1 à 13, **caractérisé en ce que** le substrat (1) est relié de façon conductible au plan thermique à un puits de chaleur (11), dont la température de consigne est ajustable et réglable.

**15.** Cavité de laser solide avec un miroir de cavité avec un absorbant saturable pour le rayonnement laser d'une longueur d'onde de laser ($\lambda_L$), un réflecteur de Bragg (2) s'étant développé sur une surface d'un substrat (1), lequel réflecteur est composé d'un grand nombre de couches de semi-conducteurs disposées en alternance à base d'un premier matériau (4) possédant un premier indice de réfraction ($n_H$) et d'un second matériau (5) possédant un deuxième indice de réfraction ($n_L$), qui est inférieur au premier indice de réfraction ($n_H$), une couche triple (3) s'étant développé directement sur le réflecteur de Bragg (2), couche avec laquelle une couche quantique simple (6) est enrobée à l'intérieur de deux couches (4', 4", 5', 5") à base du premier matériau (4', 4") ou du second matériau (5', 5") et en dehors d'un minimum d'intensité pour le rayonnement laser, et la couche triple (3) ayant une épaisseur optique correspondant à un multiple entier de $\lambda_L/2$, $\lambda_L$ étant la longueur d'onde de laser, **caractérisé en ce qu'**un revêtement antireflet (10) est appliqué sur la couche triple (3), qui est conçue pour la longueur d'onde de laser ($\lambda_L$), et **en ce que** la puissance de sortie de la cavité du laser solide est supérieure à 1 watt.

Fig. 1

Fig. 2

Fig. 3

Fig. 4

i=2

$$2 * \frac{\lambda_L}{2 n_{GaAs}}$$

Fig. 5

$$\frac{\lambda_L}{2 n_{InGaAs}}$$

48*InGaAs/InP

Fig. 6

Fig. 7